## Europäisches Patentamt
## European Patent Office
## Office européen des brevets

(19)

.⑪ Publication number: **0 106 238**
**B1**

(12) **EUROPEAN PATENT SPECIFICATION**

(45) Date of publication of patent specification: **01.04.87**

(21) Application number: **83109744.9**

(22) Date of filing: **29.09.83**

(51) Int. Cl.⁴: **A 22 C 11/02**

(54) **Method and apparatus for use in automatically and continuously making sausages with flat ends.**

(30) Priority: **30.09.82 US 430230**

(43) Date of publication of application:
**25.04.84 Bulletin 84/17**

(45) Publication of the grant of the patent:
**01.04.87 Bulletin 87/14**

(84) Designated Contracting States:
**AT BE DE FR GB IT SE**

(56) References cited:
**EP-A-0 091 081**
**FR-A-2 419 454**
**US-A-3 462 793**
**US-A-3 808 638**

(73) Proprietor: **VISKASE CORPORATION**
**6855 West 65th Street**
**Chicago, Illinois 60638 (US)**

(72) Inventor: **Kupcikevicius, Vytautas**
**7130 S.Spaulding Avenue**
**Chicago, Ill. 60629 (US)**
Inventor: **Raudys, Vytas Andrew**
**5545 S. Rutherford Avenue**
**Chicago, Ill. 60638 (US)**

(74) Representative: **Schwan, Gerhard, Dipl.-Ing.**
**Elfenstrasse 32**
**D-8000 München 83 (DE)**

Courier Press, Leamington Spa, England.

## Description

This invention relates generally to the production of large sausage products, and, more specifically, to a method and apparatus useful in automatically and continuously producing such products with flat ends.

Large sausage casings are generally manufactured from materials such as regenerated cellulose, or regenerated cellulose having fibrous webs embedded therein and are employed in the manufacture of large sausage products such as salami and bologna sausages, spiced meat loafs, cooked and smoked ham butts and the like. Such large sausage casings are produced in flat widths ranging in size from about 51 to 381 mm (2 to 15 inches) and range in length from about 0.36 to 1.83 m (14 to 72 inches) and longer. The large sausage casings most commonly used for commercial production of large sausage products range in size from about 76 to 203 mm (3 to 8 inches) in flat width and from about 0.46 to 1.83 m (18 to 72 inches) in length.

In recent years, methods and apparatus for automatically stuffing meats and food emulsions into casings in a continuous fashion have become well-known in the art. Such methods and apparatus are disclosed, for example, in US—E—30,390 and US—A—4,077,090 and US—A—4,164,057. Such methods and apparatus commonly employ shirred tubular cellulosic food casings as disclosed, for example, in US—A—2,983,949 and US—A—2,984,574.

In the production of a large sausage product, a large sausage casing is first gathered over the end of a stuffing horn and then stuffed with a food emulsion. The thusly stuffed and encased food emulsion is subsequently cooked or cured according to conventional processes. Many of these large sausage products are thereafter sliced and packaged into units of predetermined weight and slice count for retail sale. The slicing devices employed in such packaging operations are pre-set to yield a specific weight-by-slice count for use in obtaining unit packages of equal weight. Since a large sausage casing stuffed with a food emulsion has two generally hemispherical or rounded ends, these rounded ends are generally not used in producing equal weight packages and are reworked (i.e., recycled in the production of a subsequent batch of food emulsion).

In order to minimize the rework resulting from these rounded ends, many prior attempts have been made to flatten them by utilizing a variety of methods and apparatus. While such attempts have attained some degree of success, none has proved to be entirely satisfactory. For example, US—A—3,808,638 discloses a method for producing large sausage products having one pre-flattened end. While this method reduces the sausage end rework by one-half, substantial rework is still present in the non-flattened end. As a further example, US—A—3,777,331 discloses a method and apparatus for producing encased sausage with two flat ends whereby the end pieces are inserted in a non-fully automatic fashion. Such method and apparatus is limited to the use of continuous lengths of non-shirred casing, and does not lend itself to efficient commercial operation.

It is an object of the present invention to provide a method and apparatus that is useful in continuously and automatically producing encased food products having a substantially uniform diameter and substantially flat ends using shirred casings, thereby avoiding or minimizing the rework associated with the rounded ends of conventional sausages.

This and other objects of the invention will become apparent from a reading of the specification.

In one aspect, the present invention encompasses a method for automatically and continuously producing encased food product having a substantially uniform diameter and substantially flat ends which comprises:

(a) mounting a shirred tubular casing article, containing an array of flattening annular disks disposed inside a closed-end unshirred portion of said shirred tubular casing, onto a stuffing horn of a food stuffing apparatus;

(b) positioning a first flattening disk and an annular second disk of said array proximate to the closed end of said casing and the discharge end of said stuffing horn such that the flattening portions of said first and second disks are essentially perpendicular to the longitudinal axis of said stuffing horn;

(c) discharging a pressurized food product from the discharge end of said stuffing horn between said first and second disks in an amount sufficient to form an encased food length between said first and second disks;

(d) gathering an unshirred portion of said casing at a point after the annular second disk and closing the casing at said point to provide a fully closed encased food product having substantially flat ends;

(e) positioning a succeeding pair of annular flattening disks proximate to the discharge end of said stuffing horn such that the flattening portion of each disk of said succeeding pair of said disks is essentially perpendicular to the longitudinal axis of said stuffing horn; closing the succeeding casing length; and severing the fully closed encased food product; and

(f) repeating steps (c) through (e) using said succeeding pair of disks instead of said first and second disks to form another encased food length.

In another aspect, the present invention relates to an apparatus for automatically and continuously producing an encased food product having a substantially uniform diameter and substantially flat ends comprising:

(a) a stuffing horn through which the product to be encased is expressed;

(b) means to mount a shirred tubular casing article having an unshirred portion which contains an array of flattening annular disks on said stuffing horn; and

(c) positioning means axially movable with respect to said stuffing horn for engaging and moving said disks from said array to a preset position proximate to the discharge end of the stuffing horn.

In a preferred aspect of the present invention, the above-mentioned array of flattening annular disks are arranged in the form of extender modules. An extender module comprises at least two flattening annular disks fixedly-attached by means of a flexible tubular membrane. Said modules in turn are detachably-attached one to another by virtue of direct or indirect contact between at least one annular disk of one module and at least one annular disk of an adjoining module.

At the point of detachable-attachment, it is preferred that the pair of disks include a leading annular disk (i.e., the disk that is to be placed in the leading end of the sausage product) that has a central hole larger in diameter than the central hole diameter of the trailing annular disk (i.e., the disk that is to be placed in the trailing end of the sausage product). This difference in hole size between the leading and trailing disks in the pair will facilitate detachment of the two disks at the outset of the stuffing cycle due to food emulsion pressure buildup between the two disks in the pair. In addition, a trailing disk having a smaller central hole can facilitate holding the trailing disk on the stuffing horn during stuffing operations while allowing the leading disk to move off the horn in response to the stuffing operation. Of course, if desired, the disks in the pair can have central holes that are of comparable diameters.

The flattening annular disks described above can perform a casing sizing function on the unstuffed casing as it deshirrs from the casing stick, as well as performing the flattening function on the stuffed casing at the ends of the encased food product. Generally speaking, at least some portion of the sizing function will be performed by one or more of the annular disks, either alone or co-acting with an optional sizing means, if used. Such optional sizing means may include, for example, sizing disks for stretch-sizing a shirred casing to insure proper and uniform stuffed casing diameters. These are well-known in the art and are disclosed, for example in US—A—4,007,761; US—A—4,077,090; and US—A—4,164,057 and US—E—30,390 and US—E—30,265, incorporated herein by reference.

Any suitable holdback and/or sizing means such as means external to the unshirred portion of the casing, internal to said unshirred portion, and combinations thereof, may be used.

The apparatus and method of the present invention are suitably used to stuff so-called cored high density (CHD) shirred casings such as those disclosed in GB—A—2 102 267, incorporated herein by reference. The CHD system involves flexible tubular cellulosic food casing shirred and compressed onto a rigid hollow tubular core to a high compaction condition to produce a casing stick with enhanced stuffing length capacity, structural stability and strength, and larger stuffing horn adaptability. In a preferred aspect, the sizing means employed in the present invention is molded to the tubular core of the CHD system.

The annular disks useful in combination with the method and apparatus are "flattening annular disks". The term is used to designate any disk which, when employed as an insert at either end of the stuffed sausage product, will flatten the end of such product, thereby avoiding or minimizing rework resulting from rounded ends. The flattening annular disks can have any of a wide variety of shapes and sizes including, for example, round, elliptical and polygonal-with-rounded corners, provided that these disks generally conform in outer perimeter to the inner perimeter of the casing of the package article. In this regard, it is important that a tight seal exist between the inner casing perimeter and the outer annular disk perimeter so that a seal may be maintained during the stuffing operation and subsequent handling of the food product.

Each of the annular disks must have an outer diameter that is less than the casing burst diameter for the casing. By "casing burst diameter" is meant a diameter that is excessive to the extent that the casing integrity is lost and there is at least one break-point in the casing.

When the annular disks are round in shape they should generally have a central hole diameter not exceeding 99 percent of the annular disk outer diameter, although it is preferred that the central hole diameter not exceed 90 percent (more preferably 50 percent) of the annular disk diameter. If the annular disks are not round, then the effective diameter of the central hole should preferably not exceed 90 (more preferably 50) percent of the effective outer annular disk diameter. When the central hole diameter of the annular disks approaches 99 percent of the annular disk outer diameter, the annular disks are properly envisioned as hoops. When using such hoops, they should be arranged in the form of the above-discussed extender modules. In the stuffed product, the hoops would coact with the flexible tubular membrane of the extender modules to prevent formation of hemispherical product ends and, instead, to provide conically-shaped substantially flat ends.

The central hole in the annular disks can also have a wide variety of sizes and shapes including, for example, round, elliptical and polygonal-with-rounded-corners. It is most preferable to have as small a central hole as possible in the annular disks since this will facilitate maximum flattening of the meat or meat-emulsion ends in the casing. Of course, the central hole in the annular disks cannot be smaller than the diameter of the stuffing horn, stuffing horn extension or support tube upon which the annular disks are mounted.

Detachable-attachment of the leading and trailing disks of each disk pair can be effected by any suitable means such as, for example, metal or plastic tabs located around the inner or outer perimeter of one disk which co-act with a mating surface on an adjoining disk to form a disk pair. A preferred mode of detachable-attachment involves the use of metal tabs located around the outer perimeter of one annular flattening disk of the pair which interlocks with the other of the pair as hereinafter more fully described in connection with the drawings.

Fixed-attachment of the flexible tubular membrane to the annular disks of each extender module is preferably effected in proximity to the inner perimeter of each annular disk by any suitable means, such as by employing a food-acceptable metal-to-plastic adhesive or by crimping the inner perimeter of the disk around the flexible tubular membrane. If the crimping method is used, care must be taken to avoid tearing the membrane during the crimping process. In this regard, it has been found advantageous to employ a polyethylene string inside the crimp itself to act as a cushion during the crimping process, thereby minimizing the possibility of tearing the flexible tubular membrane.

The flexible tubular membrane useful for fixed-attachment purposes is preferably a membrane constructed of a plastic film such as, for example, polyethylene film, polyvinyl chloride film, or ethylene vinylacetate film. It is preferred that the flexible tubular membrane occupy a minimum of space when fully collapsed in order to minimize the size of the disk array.

It has been stated above that the number of trailing and leading flattening annular disks in the package article be at least two. It is preferred that the number of disks be sufficient to provide sausages of a length required in any given commercial situation, taking into account the length of casing available on the shirred stick in the package article and the length of the encased stuffed product required for a particular commercial operation. The required number of disks will be readily apparent to one of ordinary skill in the art. In this regard, either the length of casing in the shirred stick can be varied based on a fixed number of disks or the number of disks can be varied based on a fixed shirred stick length. Typically, a casing having a stuffed diameter of about 114 mm (4.5 inches) and an unshirred casing length of 61 m (200 feet) might employ 50 disk pairs.

The flattening annular disks useful in the present invention can be made of a wide variety of materials provided that the surface of the material chosen, or coating on the surface of the material, meet the required government specifications for use with food products. Useful materials would include metals such as aluminum and steel, and plastics such as polystyrene and polypropylene. It is preferred that the disks each be of sufficient strength to resist deformation in the stuffed product. The preferred disks of the present invention are those constructed from 34 kg tin-plated steel having a thickness of about 0.18 mm (0.007 inch) and having stiffening annular ribs, such as those often found in can lids, for added support. The tin-plated steel may be appropriately coated with a chromate conversion coating or other coating meeting the required government specifications for use with food products.

Preferred embodiments of the invention are described in detail below with reference to the drawings, in which:

Fig. 1 is a sectional view of the stuffing apparatus of the invention equipped with a casing article for stuffing.

Fig. 2 is a view of the emulsion seal means useful in the invention.

Fig. 3 is a cross-sectional view of an extender module magazine.

Fig. 4 is a close-up view of a quick-connection attachment for connecting an extender module magazine to the stuffing horn of the stuffing apparatus.

Figs. 5 to 8 are views of the stuffing apparatus during various stages of the stuffing operation.

Fig. 9 is an open and closed view of a split pressure (snubbing) ring.

Fig. 10 is a profile view of a particularly preferred single-piece support tube configuration useful in the invention as mounted on a stuffing horn apparatus.

Fig. 11 is a sectional view of a package article incorporating the single-piece support tube configuration of Fig. 10.

Fig. 12 is a vertical cross-sectional view of a preferred clover-leaf design sizing means useful in the package article of the invention.

Fig. 13 is a sectional view of a preferred arrangement for the annular disks useful in the invention whereby two disks are fixedly-attached by means of a flexible tubular membrane.

Fig. 14 is a cut-away view of a disk pair showing a preferred means of detachable-attachment for the disk pair.

Fig. 15 is a sectional view of an array of disk pairs.

Fig. 16 is a view of a sausage product produced using the package article of the invention.

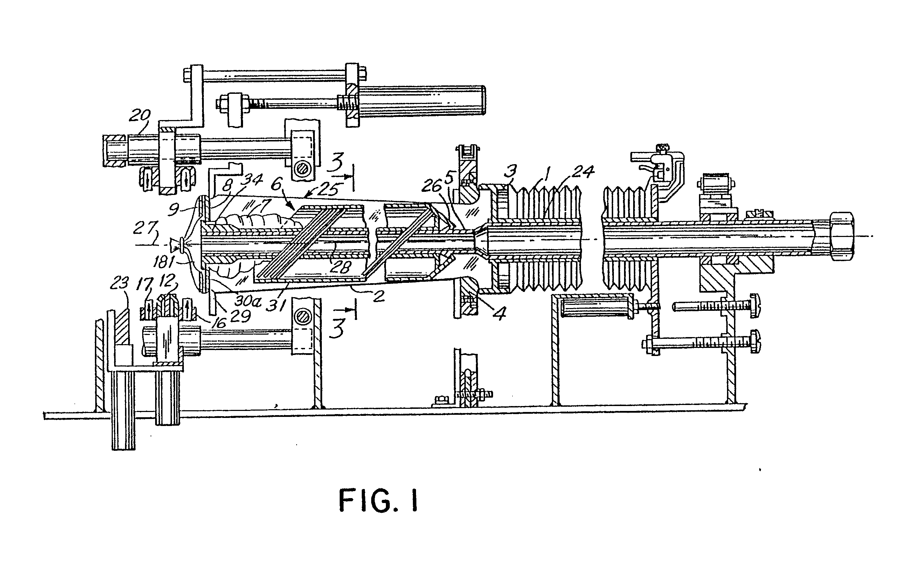

Fig. 1 shows a stuffing apparatus within the scope of the invention with a casing article 25 mounted thereon.

The casing article itself forms no part of the present invention and is more particularly described in EP—A—106237 incorporated herein by reference. Briefly however, the article includes a shirred portion 1 of casing and an unshirred portion 2. Disposed within the unshirred portion 2 is an extender module magazine 6 which contains a plurality of end flattening disks moved by the stuffing apparatus into the ends of the stuffed products during an automatic stuffing operation. The unshirred portion 2 is pre-closed at its free end, preferably with a clip, and the pre-closure also closes an end of the flexible tubular membrane 181 at the point of pre-closure. The extender modules, while briefly described hereafter are more particularly described in EP—A—105475 incorporated herein by reference.

While Figure 1 shows the stuffing apparatus of the present invention, it should be understood that only those components essential to an understanding of the invention are shown. Other conventional components are omitted or only briefly described as they would be readily apparent to one skilled in the art.

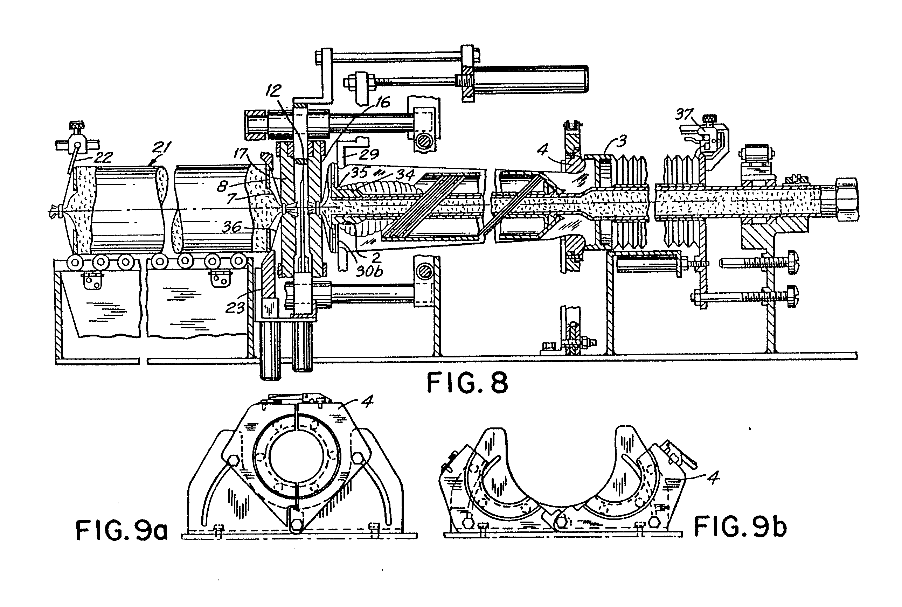

The stuffing apparatus is seen to include a clipper carriage 20 which includes means for closing and severing the ends of the casing stuffed products as they are formed. The structure and function of this carriage is conventional. Also conventional is the support sleeve 24 and a pressure ring 4 shown more clearly in Figure 9 in the non-conventional form of a split pressure ring 4. These components, except for the split version of ring 4, are all more particularly described in US—A—4,077,090, US—A—4,164,057 and US—E—30,390, the disclosures of which are incorporated herein by reference.

The stuffing apparatus also includes a split emulsion sealing ring 23 and an extender positioning means 29. The split emulsion sealing ring 23 is adapted to seal around the outer periphery of a trailing end flattening disk during the stuffing operation as described hereinbelow. It also moves the trailing end disk off of the stuffing horn after the stuffed product is formed so that a clipper device 17 can close the casing over the rear of this trailing disk.

Positioning means 29 is movable along a path parallel to the axis of the stuffing horn. This positioning means is shaped as an elliptical crescent so us to fit over the slanted annular end flattening disks in the extender module magazine 6. However, as these disks are moved towards an upright position during the automatic stuffing operation, they can be engaged by the positioning means.

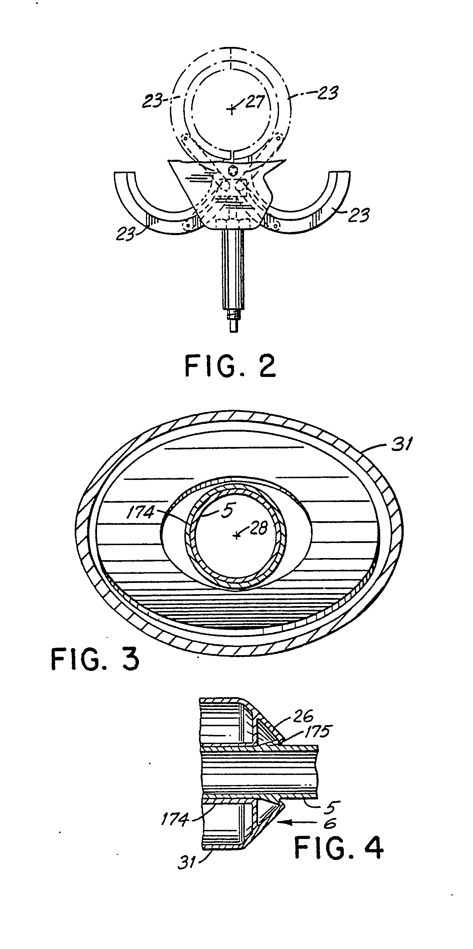

Figure 1 shows the clipper carriage 20 moved to a transverse loading position. The shirred stick 1 portion of the prepackaged shirred tubular casing article 25 is placed on the support sleeve 24, and the sizing means 3 is attached to the support sleeve via the "fingers" of sizing disk 3 as is known in the art (see U.S. Reissue Patent 30,265). The extender module magazine 6 portion of the prepackaged shirred tubular casing article 25 is attached to the stuffing horn extension 5 via a quick-connection fastening means 26 as shown in Figures 1 and 4.

Referring to Fig. 4 there is disclosed an extender module magazine 6 mounted on stuffing horn extension 5. Magazine 6 comprises magazine outer sleeve 31 (also shown in Fig. 3), which encloses an array of extender modules (not shown) which are mounted on a central support tube 174. The magazine 6 also comprises fastening means 26 whereby the magazine is fit in place on stuffing horn extension 5 by snapping into a locking position behind ramped elements 175 of said stuffing horn extension.

The clipper carriage 20 is then moved transversely to the "operate" position (i.e., the central axis 27 of the emulsion seal ring 23 is aligned with the central axis 28 of the stuffing horn extension 5). The split pressure ring 4, similar to the convoluted snubbing ring disclosed in US—A—4,077,090 and US—A—4,164,057, but split in order to facilitate loading of casing on the stuffing horn, is closed (see Fig. 9) over the unshirred length of casing just forward of the sizing means 3. At this point, the clipper carriage 20 is in its forward (or reset/clip) position (see Fig. 1), the emulsion seal ring 23 is open, and the elliptical extender positioning ring 29 is up against a first extender pair 30a positioned at the end of a nose piece 34 on the end of support tube 174.

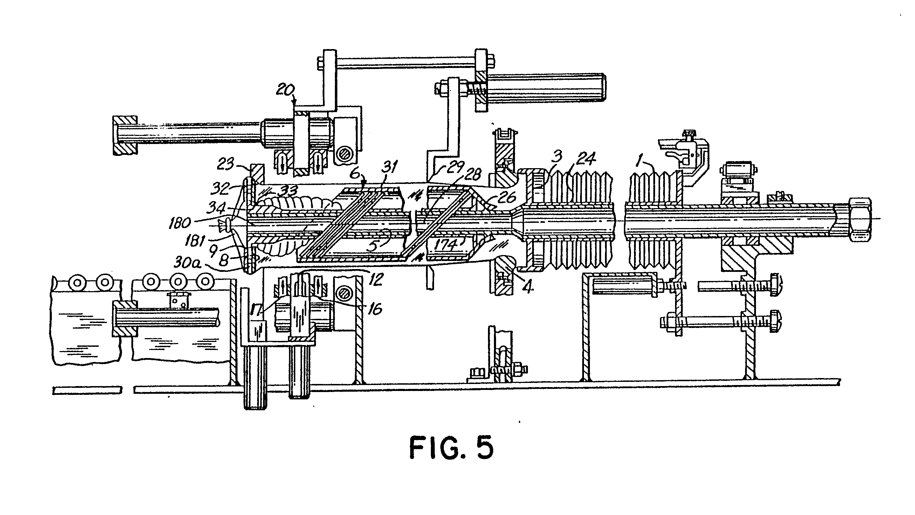

The machine cycle is then initiated. The clipper carriage, including the emulsion seal, moves to the stuff position (see Fig. 5) as the positioning means 29 is retracted rearward over the extender module magazine sleeve 31. The emulsion seal ring 23 then closes over the first disk pair 30a (as shown in Fig. 5).

Emulsion sealing is effected by the coaction of the outer periphery 32 of the trailing disk 8 of the leading disk pair 30a with the emulsion seal ring 23, and by the coaction of the inner periphery 33 of the trailing disk 8 of the leading disk pair 30a with the nose piece 34 of the extender module magazine 6. The emulsion pump is then activated.

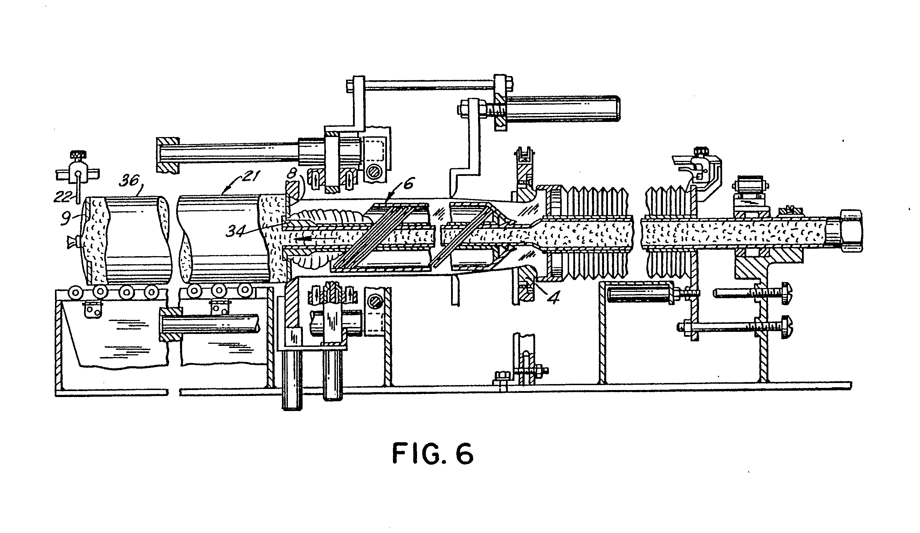

Product emulsion flows through the stuffing horn into the pocket 180 confined by the pre-clipped tubular membrane 181 and into the space between the leading and trailing disks 9, 8 respectively. Emulsion pressure separates the leading disk 9 from the trailing disk 8 of the disk pair 30a and stuffing proceeds (Fig. 6) thereby forming a stuffed product 21. In an alternate embodiment, when stuffing chunk food product instead of food emulsion, mechanical means is envisioned to effect separation of the disks of disk pair 30a. Casing diameter control during stuffing is provided with casing snubbing achieved through the coaction of split pressure ring 4 and sizing means 3 as shown in Fig. 6 and as is conventional in the art (see US—A—4,077,090 and US—A—4,164,057, both incorporated herein by reference).

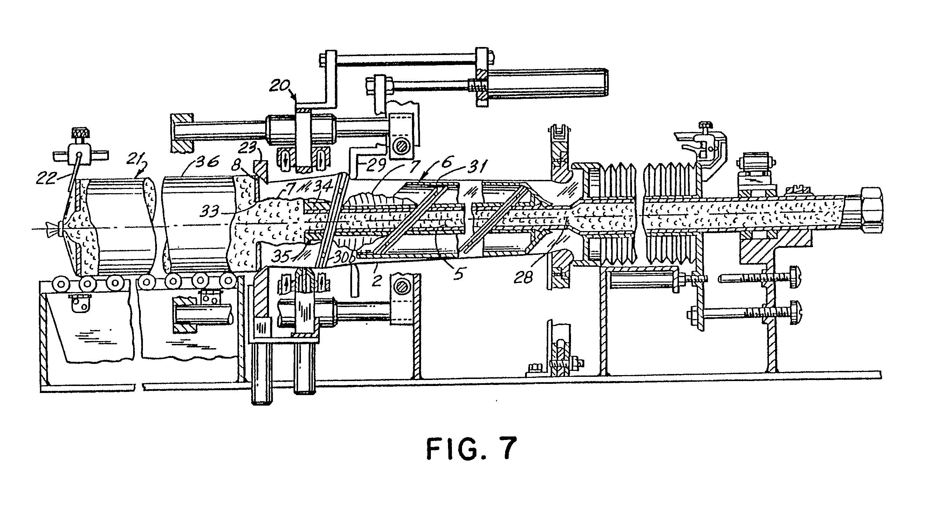

When the leading end of the stuffed product 21 contacts the product length sensor 22 (see Fig. 7), the emulsion pump is stopped. The clipper carriage 20, including emulsion seal 23, then moves to its most forward position, advancing with it the stuffed product 21 by detaching the trailing disk 8 from the nose piece 34 by the forced passage of the trailing disk 8 over the flexible flange 35 of said nose piece 34. The flexible flange 35 of the nose piece 34 is designed to flex sufficiently, or alternatively, the trailing disk 8 is designed to have an inner periphery that will flex sufficiently, to allow passage of trailing disk 8 over the flexible flange 35 when the trailing disk 8 is subjected to a sufficiently large axial force. This axial force is supplied as carriage 20 moves forward.

The forward motion of the trailing disk 8 (now an integral part of the stuffed product 21) pulls the next disk pair 30b partially free from the sleeve 31 of the extender module magazine 6. This is due to the flexible membrane 7 which connects the trailing disk 8 of disk pair 30a, with a leading disk of the next disk pair 30b. This connection as well as the structure and detachable attachment of a trailing disk 8 to a leading disk 9 is further described hereinbelow.

As this next disk pair 30b is pulled free from the magazine 6, the positioning means 29 is moved axially forward to "pick up" said next disk pair 30b (Fig. 7), acting externally to the unshirred casing 2 within which said next disk pair 30b is enclosed. The positioning means then moves (or "escorts") the disk pair 30b into proper position on the extender module magazine nose piece 34.

As this next disk pair is moved forward towards the nose piece 34 by the disk positioning means 29, it is simultaneously straightened so that its proper final angular position is attained (i.e., the plane of the disk pair 30b in position for commencement of a stuffing cycle, as shown in Fig. 5, must be normal to the axis 28 of the stuffing horn extension 5). With the positioning means 29 holding the new disk pair 30b tightly against the flexible flange 35 of the extender module nose piece 34, the clip and sever sequences are initiated (see Fig. 8). A forward clip closing means 17 and a rear clip closing means 16 are activated simultaneously. Clipping takes place over the emulsion-filled flexible tubular membrane 7 connecting the trailing disk 8 of the finished product 21 and the new disk pair 30b. The outer casing 36 of the stuffed product 21 is clipped together with the tubular membrane 7 by the forward clip-closing means 17. In like manner, the outer empty unshirred casing 2 is clipped by the rear clip-closing means 16 together with tubular membrane 7 at a point aft of the clip applied by the forward clip-closing means 17. Severing takes place between the clips, immediately after said clips are in place, by a casing severing knife 12. Emulsion is removed from the severing area of the membrane by the squeezing action of the clip-closing means 16 and 17. The clip-closing means 16 and 17 are then opened, and the casing severing knife 12 is retracted. The emulsion seal ring 23 is opened, as shown in Fig. 2, in preparation for the next operating cycle. The machine now proceeds to its next cycle. Stuffing continues by automatically repeating the full cycle of operations until the end-of-casing sensor 37 senses depletion of the shirred casing supply and terminates automatic machine action.

The package article of the present invention is suitable for use with the so-called cored high density (CHD) system as set forth in GB—A—2 102 267, incorporated herein by reference. The CHD system involves flexible tubular cellulosic food casing shirred and compressed onto a rigid hollow tubular core to a high compaction condition to produce a casing stick with enhanced stuffing length capacity, structural stability and strength, and larger stuffing horn adaptability. In a preferred aspect, the sizing means employed in the present invention is molded to the tubular core of the CHD casing article. The tubular core of the CHD casing article is a support sleeve which can also act as the stuffing horn itself or as a tension sleeve as disclosed in US—E—30,390. If the tubular core is used as the stuffing horn it may require support at the stuffing end in order to insure stability and prevent flopping.

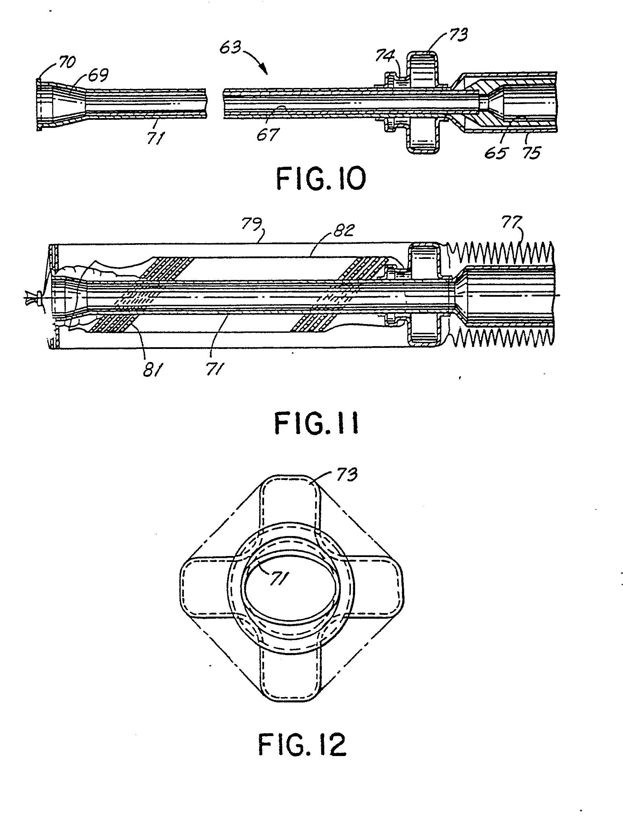

An alternate and preferred embodiment useful within the scope of the present invention is shown in Fig. 10 wherein a single-piece support tube 63 is shown fitted over the stuffing horn 65 and stuffing horn extension 67. The single-piece support tube comprises a conical nose piece 69 having a flexible end lip 70, an elliptical disk support piece 71, a sizing means 73, and a disk array overwrap tie-down slot 74 all fit together with a CHD tubular core 75 to provide strength and coherency advantages that are associated with single piece construction. Fig. 11 shows a package article utilizing the above-discussed single-piece support tube having a shirred casing stick 77 and an unshirred casing length 79 containing a disk array 81 and a disk array overwrap 82, all mounted thereon. A preferred sizing means 73 having a cloverleaf design is shown in Fig. 12. In brief, this type of sizing means cooperates with means external to the casing to stretch-size the casing into the recesses and over the lands of the clover leaf to provide the desired effective diameter.

The disk array 81 is preferably canted for use during stuffing as shown in Fig. 11. Since the casing to be stuffed will have an inner diameter approaching the outer diameter of the disk array 81, the canting will allow the casing to be drawn over the disk array and its overwrap 82 during the stuffing operation with minimal drag. Canting also allows the support tube 63 and the stuffing horn extension to be generally elliptical in vertical cross-section (see Fig. 12) because the projection of the round, but canted, central holes of the disk array 81 onto a plane normal to the stuffing horn axis 1 will be an ellipse. This elliptical shape for the stuffing horn affords maximum emulsion throughput during stuffing. This elliptical shape is presented more clearly in Fig. 3 which shows a cross-sectional view of an extender module magazine. Magazine outer sleeve 31 is shown in Fig. 3 as having an elliptical shape to conform to the shape of the canted extender modules. The possibility of using an elliptical shape for the central support tube and the stuffing horn is also illustrated in Fig. 3 by virtue of the projected shape of the canted disk central hole.

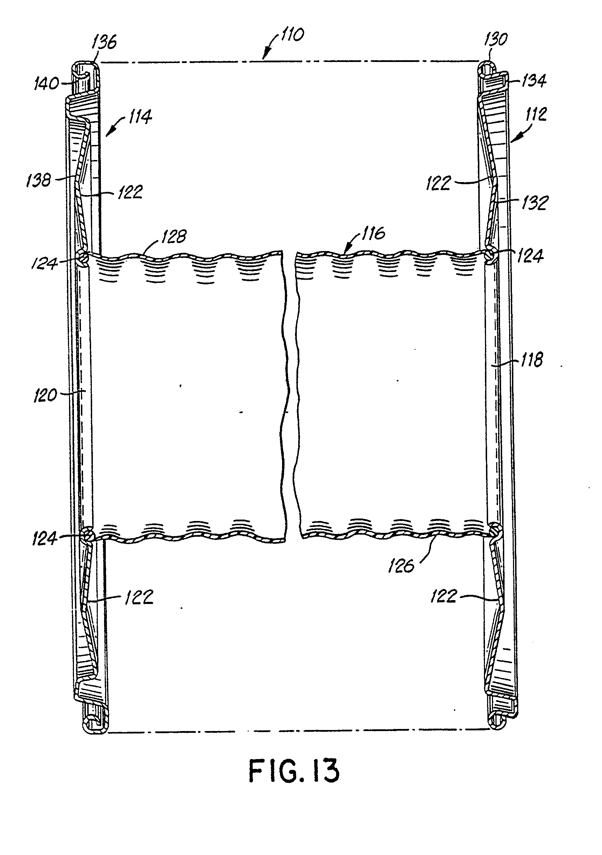

Fig. 13 shows two flattening annular disks useful in the present invention, fixedly-attached as generally indicated at 110 (hereinafter called an "extender module"), which can be adapted for use in the automatic production of large sausage products having flat ends. The extender module 110 includes a leading disk 112 and a trailing disk 114 connected by a flexible tubular membrane 116.

The terms "leading" and "trailing" as applied to the disks, denotes whether the particular disk forms the leading end, or the trailing end respectively, of a stuffed product. Thus, with reference to the extender module 110 as shown in Fig. 13, trailing disk 114 will go to form a flat trailing end of a first stuffed product during the stuffing operation while leading disk 112 will go to form a flat leading end of the next stuffed product.

Each disk 112, 114 as shown in Fig. 13, is generally the shape of a substantially flat, annular disk. Preferably, the central opening 118 in leading disk 112 is larger in diameter than the central opening 120 in trailing disk 114 for purposes set out herein below.

Also, it is preferred that each opening 118, 120 be as small as possible as this will facilitate maximum flattening of the ends of the stuffed product. Since in a preferred embodiment, both disks will be located on a stuffing horn assembly, the size of the opening 118, 120 should be sufficient to allow passage of the disks over the stuffing horn. However, in an alternate embodiment, one disk in the array (i.e. the very first disk) will have no hole.

Each disk 112, 114 is preferably slightly dished about its opening as shown at 122. In part, this strengthens each disk and helps to prevent deformation in use. The portion of each disk about openings 118, 120 is also bent inward and formed about a core 124 of polyethylene or other suitable, relatively resilient material. Captured between each core and the material of the disk as formed about these cores, are the respective ends 126, 128 of the tubular membrane 116. In this fashion the tubular membrane defines a tubular passage having one end 126 defined by opening 118 in the leading disk 112 and its second end defined by opening 120 in the trailing disk 114.

Leading disk 112 has a bead or rim 130 formed about the outer periphery to add strength and rigidity to the disk. Since, in use, disk 112 will be disposed within a stuffed casing, the bead also will help to prevent the disk from damaging the casing during the stuffing process as the casing is stretched over the bead to effect a seal between the inner perimeter of the casing and the outer perimeter of the leading disk 112.

Formed on the rear, or outwardly facing surface 132 of leading disk 112, is an annular shoulder 134. This shoulder is disposed about the leading disk adjacent its outer periphery for purposes set out hereinbelow.

As shown in Fig. 13, the trailing disk 114 has its outer periphery formed with a flange 136 that is bent or rounded over the front or leading face 138 of the disk. This configuration provides the rim of the trailing disk 114 with a rounded surface so that in use, a casing can be stretched over the trailing disk to effect a seal similar to the seal between the casing and the leading disk. This configuration also provides an annular lip 140 which extends about the periphery of the trailing disk. This lip is not continuous but has pieces removed so as to form a plurality of tabs 140, spaced about the periphery of the trailing disk.

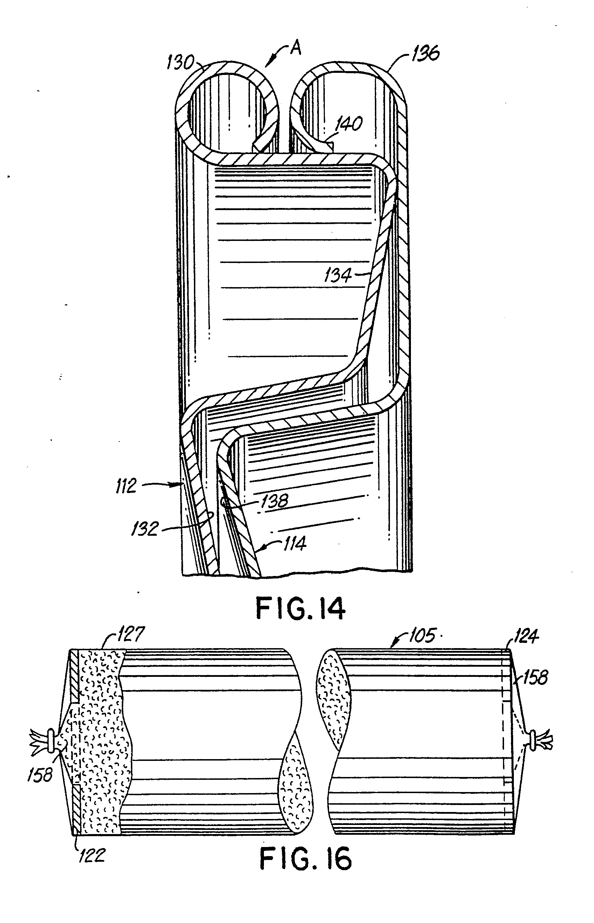

Tabs 140 on the trailing disk 114 and the shoulder 134 on the leading disk 112 are coincident, and the respective sizes of shoulder 134 and tabs 140 are such that the shoulder can snap-fit under the tabs. With this arrangement, a leading disk 112 of one extender module can be detachably connected to the trailing disk 114 of a second extender module simply by aligning the respective leading and trailing disks and then snapping shoulder 134 beneath tabs 140 as shown in Fig. 14.

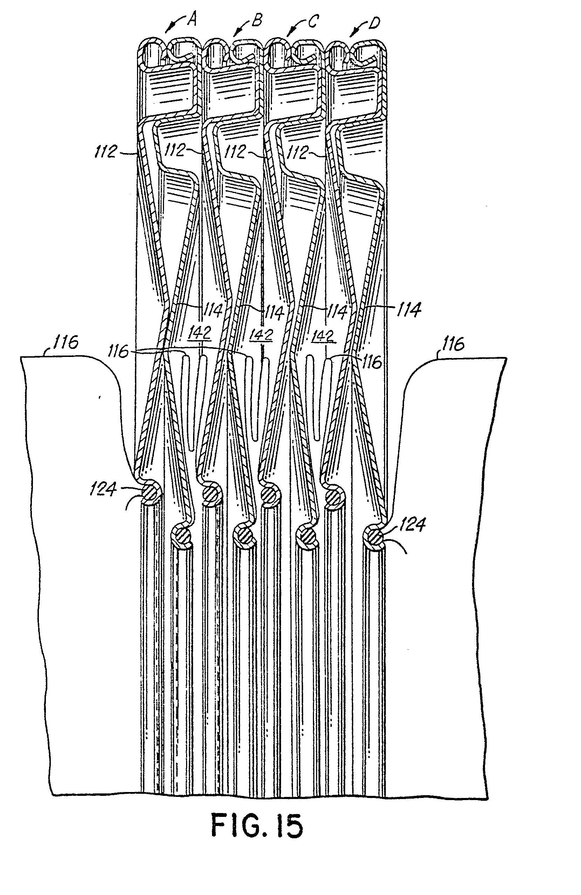

For purposes of describing the present invention, a leading and a trailing disk which are detachably connected together as shown in Fig. 14 will be referred to as a disk pair and will be identified by letters A, B, C, etc. Thus, Fig. 14 shows a disk pair A formed by detachably connecting a leading disk 112 of one extender module 110 (Fig. 13), to the trailing disk 114 of another identical extender module. In this fashion, any number of extender modules 110 can be detachably connected to form an ordered array of disk pairs A, B, C, etc., each disk pair being connected to the following disk pair by flexible tubular membrane 116. Such an arrangement is shown in Fig. 15. It also should be appreciated that the leading extender 112 of the first extender pair A in an ordered array could be a solid disk. That is, the central opening 118 could be omitted from the leading extender of this pair.

Fig. 15 shows four disk pairs A, B, C and D connected one to another by tubular membranes 116. It should be understood that four disk pairs are shown for purposes of illustration only and that any number of extender modules 110 can be connected as may be needed. Moreover, since tubular membrane 116 is flexible, the disk pairs A, B, C and D can be collapsed axially one against the other to form a relatively compact, ordered array of disk pairs. When the disk pairs are collapsed together, the dished configuration of each leading and trailing disk 112, 114 respectively, as described herein above, provides a space 142 to accommodate the tubular membrane 116 which folds into this space.

Fig. 16 shows a sausage 105 produced using the package article of the present invention. The sausage 105 is encased by casing 127 and is shown with substantially flat ends produced by flattening annular disks 122, 124. The emulsion contained in pockets 158 must be reworked. It should be noted, however, that the rework contained in the pockets is substantially minimal as compared to that found in the rounded ends of the prior art sausages, as discussed in the following example.

In an alternate embodiment, the apparatus disclosed in US—E—30,390, incorporated herein by reference, may be modified to provide the desired product with substantially flat ends. Such modification involves among other things: (1) fixing the support sleeve of the stuffing machine shown in that reissue patent in place on the stuffing horn so that the sleeve does not move during the stuffing operation; (2) rendering the sizing disk of the stuffing machine shown in that reissue patent unmoveable on the stuffing horn; (3) employing a sizing disk that is small enough to impart a degree of casing stretch-sizing, when used in conjunction with the snubbing means disclosed in US—A—4,077,090 while permitting casing slacking when required during the stuffing cycle; and, (4) rendering said snubbing means slideable during the stuffing operation to provide effective casing stretch-sizing in conjunction with the sizing disk.

Operation and control of the apparatus described above can be effected using pneumatic motive means. Alternately, electro-pneumatic means can be employed. Typically, a plurality of motor-driven cam-operated timing switches can be used to control the sequential operations of stuffing, closing and severing of the casing.

The following example is intended to illustrate, but in no way limit, the scope of the present invention.

Example

In order to show the improvement associated with the article of the present invention, a conventional stuffing apparatus of the type shown in US—E—30,390 and sold by Union Carbide Corporation as a Model 400 F Shirmatic stuffing apparatus, was modified as described above and as shown in Figure 1. An extender package article as shown in Figure 1 was mounted to the modified apparatus and the modified apparatus operated continuously and automatically to produce stuffed products having substantially flat ends.

As a control, a similar but unmodified apparatus, as disclosed in US—E—30,390, was operated in a conventional manner to produce stuffed products having conventional rounded ends. Control products were made using a Shirmatic shirred casing article as disclosed in US—A—4,007,761, incorporated herein by reference.

Both runs utilized a Shirmatic clear, size 7-1/2K casing and each apparatus was adjusted to stuff the casings to the manufacturer's recommended "green" (i.e., unprocessed) diameter of about 117.3 mm (4.62 inches). Also, a similar meat bologna emulsion was utilized for each run.

Fourteen stuffed products were then made using the modified apparatus and thirteen using the conventional apparatus. Measurements taken about the midpoint of each product were uniform, and midpoint diameters for each product averaged 117.6 mm (4.63 inches).

After stuffing, all products underwent similar processing in a smoke chamber and were stored at −1.1°C (30°F) for 24 hours to produce the finished products for slicing.

Each product was sliced using a deli-type sausage slicing machine set to produce a slice 4.3 mm (0.17 inches) thick. Both the leading and trailing end of each product was sliced until the mean slice diameter approached 112.8 mm (4.44 inches) for the leading end and 114.8 mm (4.52 inches) for the trailing end.

An average of 13 slices were cut from each end of the conventional products before approaching the finished mean diameters as set out above. In comparison, only an average of 1.5 slices were taken from each end of the flat ended products made using the extenders and modified stuffing apparatus as described herein.

The weight of the individual slices and the combined total weight for slices from both ends of each product were recorded. This data indicated that the average amount of rework for each product having the conventional rounded ends totaled 833 grams. In contrast, the weight of the rework from the flat ended stuffed products averaged only 102 grams. The rework from the flat-ended product was only 11.6% of the rework from the conventional round-ended product.

To confirm the overall uniformity of the finished product diameter of the flat ended stuffed products, an additional six slices were taken from the end of each product. The mean diameter and weight of each of these additional slices were uniform and within acceptable limits for commercial packaging in weight-by-slice count packages.

The eight-fold decrease in rework and the slice count increase from each product, as demonstrated by this test, established that the method and apparatus of the present invention are suitable for use in the continuous and automatic production of stuffed products having substantially flat ends.

**Claims**

1. A method for automatically and continuously producing encased food product (21, 105) having a substantially uniform diameter and substantially flat ends which comprises:

(a) mounting a shirred tubular casing article (25, 77, 79), containing an array of flattening annular disks (8, 9, 112, 114, 122, 124) disposed inside a closed-end unshirred portion (2, 79) of said shirred tubular casing (1, 77), onto a stuffing horn (65) of a food stuffing apparatus;

(b) positioning a first flattening disk (9, 112, 122) and an annular second disk (8, 114, 124) of said array proximate to the closed end of said casing and the discharge end of said stuffing horn (65) such that the flattening portions of said first and second disks (8, 9, 112, 114, 122, 124) are essentially perpendicular to the longitudinal axis of said stuffing horn;

(c) discharging a pressurized food product from the discharge end of said stuffing horn (65) between said first and second disks (8, 9, 112, 114, 122, 124) in an amount sufficient to form an encased food length between said first and second disks;

(d) gathering an unshirred portion of said casing at a point after the annular second disk (8, 114, 124) and closing the casing at said point to provide a fully closed encased food product (21, 105) having substantially flat ends;

(e) positioning a succeeding pair of annular flattening disks proximate to the discharge end of said stuffing horn (65) such that the flattening portion of each disk of said succeeding pair of said disks is essentially perpendicular to the longitudinal axis of said stuffing horn; closing the succeeding casing length; and, severing the fully closed encased food product; and,

(f) repeating steps (c) through (e) using said succeeding pair of disks instead of said first and second disks to form another encased food length.

2. The method of claim 1 which includes continuing the cycle of steps (c) through (f) in an automatic and continuous manner until the casing (1, 2, 77, 79) or annular disks (8, 9, 112, 114, 122, 124) are expended.

3. The method of claim 1 or 2 wherein said second annular disk (8, 114) has an outer perimeter greater than the unstretched inner perimeter of the casing (25, 77, 79) when placed in a position essentially perpendicular to the axis of said stuffing horn (65) prior to step (c), thereby performing at least a partial casing sizing function for the unshirred portion (2, 79) of said casing.

4. The method of one of claims 1 to 3 wherein each of said annular disks (8, 9, 112, 114, 122, 124) has an outer diameter less than the casing burst diameter for said casing (25, 77, 79).

5. The method of one of claims 1 to 4 wherein the diameter of the central hole (118, 120) in each of said annular disks (8, 9, 112, 114, 122, 124) does not exceed 90 percent of the annular disk outer diameter.

6. The method of one of claims 1 to 5 wherein said unshirred portion (2, 79) of said casing (25, 77, 79) additionally contains a sizing means (3, 73) disposed therein.

7. The method of one of claims 1 to 6 wherein said flattening annular disks (8, 9, 112, 114) are detachably-attached in pairs (30a, 30b, 30c, A, B, C, D) each disk of the pair being fixedly-attached by means of a flexible tubular membrane (7, 116) to a disk of an adjoining pair.

8. The method of claim 7 wherein said pairs (30a, 30b, 30c, A, B, C, D) each have a leading and a trailing annular disk (9, 8, 112, 114), said leading annular disk (9, 112) having a central hole (118) with a diameter larger than the diameter of the central hole (120) of the trailing annular disk (8, 114) in the pair.

9. The method of one of claims 1 to 4 wherein said first flattening disk (9, 112, 122) is an annular disk or a solid disk.

10. An apparatus for automatically and continuously producing an encased food product (21, 105) having a substantially uniform diameter and substantially flat ends comprising:

(a) a stuffing horn (65) through which the product to be encased is expressed;

(b) means (5, 67) to mount a shirred tubular casing article (25, 77, 79) having an unshirred portion (2, 79) which contains an array of flattening annular disks (8, 9, 112, 114, 122, 124) on said stuffing horn (65); and,

(c) positioning means (29) axially movable with respect to said stuffing horn (65) for engaging and moving said disks from said array to a preset position proximate to the discharge end of the stuffing horn.

11. The apparatus of claim 10 wherein said flattening annular disks (8, 9, 112, 114) are detachably-attached in pairs (30a, 30b, 30c, A, B, C, D), each disk in the pair being fixedly-attached by means of a flexible tubular membrane (7, 116) to a disk of an adjoining pair.

12. The apparatus of claim 10 or 11 comprising stop means (35, 70) at said preset position for engaging and holding one disk (8, 114) of said pair while leaving the other disk (9, 112) of said pair free to move in response to the introduction of food product from said stuffing horn.

13. The apparatus of one of claims 10 to 12 wherein said means serving to mount said casing article (25, 77, 79) on said stuffing horn (65) includes a stuffing horn portion (5, 67) adapted to carry said array of annular disks (8, 9, 112, 114, 122, 124).

14. The apparatus of one of claims 10 to 13 wherein said means serving to mount said casing article on said stuffing horn (65) includes a portion (71) having a circular or elliptical cross-section adapted to carry said array of annular disks (8, 9, 112, 114, 122, 124).

15. The apparatus of one of claims 10 to 14 additionally containing sizing or holdback means (3, 73) located about said stuffing horn (65) to assist in stretch-sizing the unshirred portion (2, 79) of said casing.

16. The apparatus of claim 15 wherein said sizing or holdback means (3, 73) is disposed within said unshirred casing portion (2, 79) and is a portion of said casing article (25, 77, 79).

17. The apparatus of one of claims 10 to 16 wherein said article mounting means includes a support tube (65) having an inlet end and a discharge end for conveying food product from a supply source, said support tube adapted to carry said shirred tubular casing article (25, 77, 79), and said support tube having a tube portion (5, 66) adapted to hold said unshirred portion (2, 79) of said shirred tubular casing article including said array of axially disposed flattening annular disks (8, 9, 112, 114, 122, 124) inside said unshirred portion of casing, said tube portion extending through the central holes (118, 120) of said annular disks.

18. The apparatus of one of claims 12 to 17 which additionally contains emulsion seal means (23) located proximate to said stop means (35, 70) and co-acting with the outer periphery of said one disk (8, 114) of said pair being held by said stop means, said emulsion seal means (23) effecting a seal for said unshirred casing (2, 79) at the periphery of said one disk.

19. The apparatus of claim 18 wherein said emulsion seal means (23) is a split ring.

**Patentansprüche**

1. Verfahren zur automatischen und kontinuierlichen Herstellung von umhüllten Nahrungsmittelprodukten (21, 105) mit im wesentlichen gleichförmigem Durchmesser und im wesentlichen flachen Enden, bei dem:

(a) eine geraffte rohrförmige Hüllenanordnung (25, 77, 79), die eine innerhalb eines ein geschlossenes Ende aufweisenden entrafften Teils (2, 79) der gerafften rohrförmigen Hülle (1, 77) untergebrachte Gruppe von ringförmigen Abflachungsscheiben (8, 9, 112, 114, 122, 124) enthält, auf einem Füllrohr (65) einer Nahrungsmittelfüllvorrichtung angeordnet wird;

(b) eine erste Abflachungsscheibe (9, 112, 122) und eine ringförmige zweite Scheibe (8, 114, 124) der Gruppe nahe dem geschlossenen Ende der Hülle und dem Auslaßende des Füllrohrs (65) derart positioniert werden, daß die Abflachungsteile der ersten und der zweiten Scheibe (8, 9, 112, 114, 122, 124) im wesentlichen senkrecht zu der Längsachse des Füllrohrs stehen;

(c) ein unter Druck stehendes Nahrungsmittelprodukt von dem Auslaßende des Füllrohrs (65) aus zwischen der ersten und der zweiten Scheibe (8, 9, 112, 114, 122, 124) in ausreichender Menge ausgetragen wird, um zwischen der ersten und der zweiten Scheibe einen umhüllten Nahrungsmittelabschnitt auszubilden;

(d) ein entraffter Teil der Hülle an einer hinter der ringförmigen zweiten Scheibe (8, 114, 124) liegenden Stelle gefaßt und die Hülle an dieser Stelle verschlossen wird, um eine voll geschlossenes, umhülltes Nahrungsmittelprodukt (21, 105) mit im wesentlichen flachen Enden zu erhalten;

(e) ein folgendes Paar von ringförmigen Abflachungsscheiben nahe dem Auslaßende des Füllrohrs (65) derart positioniert wird, daß der Abflachungsteil jeder Scheibe des folgenden Scheibenpaares im wesentlichen senkrecht zu der Längsachse des Füllrohrs steht; der folgende Hüllenabschnitt verschlossen wird und das voll geschlossene umhüllte Nahrungsmittelprodukt abgetrennt wird; und

(f) die Verfahrensschritte (c) bis (e) unter Verwendung des folgenden Scheibenpaares an Stelle der ersten und der zweiten Scheibe wiederholt werden, um einen weiteren umhüllten Nahrungsmittelabschnitt auszubilden.

2. Verfahren nach Anspruch 1, bei dem die Folge der Verfahrensschritte (c) bis (f) automatisch und kontinuierlich fortgesetzt wird, bis die Hülle (1, 2, 77, 79) oder die ringförmigen Scheiben (8, 9, 112, 114, 122, 124) aufgebraucht sind.

3. Verfahren nach Anspruch 1 oder 2, bei dem die zweite ringförmige Scheibe (8, 114), wenn sie vor dem Verfahrensschritt (c) in eine zu der Achse des Füllrohres (65) im wesentlichen senkrechte Position gebracht wird, einen Außenumfang hat, der größer als der ungereckte Innenumfang der Hülle (25, 77, 79) is, wodurch die Scheibe mindestens eine partielle Hüllenkalibrierfunktion für den entrafften Teil (2, 79) der Hülle erfüllt.

4. Verfahren nach einem der Ansprüche 1 bis 3, wobei jede der ringförmigen Scheiben (8, 9, 112, 114, 122, 124) einen Aussendurchmesser hat, der kleiner als der Hüllenberstdurchmesser für die Hülle (25, 77, 79) ist.

5. Verfahren nach einem der Ansprüche 1 bis 4, bei dem der Durchmesser der Mittelöffnung (118, 120) jeder der ringförmigen Scheiben (8, 9, 112, 114, 122, 124) 90 Prozent des Außendurchmessers der ringförmigen Scheibe nicht übersteigt.

6. Verfahren nach einem der Ansprüche 1 bis 5, wobei der entraffte Teil (2, 79) der Hülle (25, 77, 79) zusätzliche eine darin untergebrachte Kalibrieranordnung (3, 73) enthält.

7. Verfahren nach einem der Ansprüche 1 bis 6, wobei die ringförmigen Abflachungsscheiben (8, 9, 112, 114) paarweise (30a, 30b, 30c, A, B, C, D) lösbar unterneinander verbunden sind, und wobei jede Scheibe des Paares über eine flexible rohrförmige Membran (7, 116) mit einer Scheibe eines angrenzenden Paares fest verbunden ist.

8. Verfahren nach Anspruch 7, wobei die Paare (30a, 30b, 30c, A, B, C, D) jeweils eine vordere und eine hintere Ringscheibe (9, 8, 112, 114) aufweisen und wobei die vordere ringförmige Scheibe (9, 112) eine Mittelöffnung (118) mit einem Durchmesser aufweist, der größer als der Durchmesser der Mittelöffnung (120) der hinteren ringförmigen Scheibe (8, 114) des Paares ist.

9. Verfahren nach einem der Ansprüche 1 bis 4, wobei die erste Abflachungsscheibe (9, 112, 122) eine ringförmige Scheibe oder eine massive Scheibe ist.

10. Vorrichtung zur automatischen und kontinuierlichen Herstellung eines umhüllten Nahrungsmittelprodukts (21, 105) mit im wesentlichen gleichförmigem Durchmesser und im wesentlichen flachen Enden, die versehen ist mit:

(a) einem Füllrohr (65), über welches das zu umhüllende Produkt ausgepreßt wird;

(b) Mitteln (5, 67) zur Montage einer gerafften rohrförmigen Hüllenanordnung (25, 77, 79) mit einem eine Gruppe von ringförmigen Abflachungsscheiben (8, 9, 112, 114, 122, 124) enthaltenden entrafften Teil (2, 79) auf dem Füllrohr (65); und

(c) einer mit Bezug auf das Füllrohr (65) axial bewegbaren Positionieranordnung (29), die mit den Scheiben zusammenwirkt und die Scheiben von der Gruppe in eine vorbestimmte Position nahe dem Auslaßende des Füllrohrs bewegt.

11. Vorrichtung nach Anspruch 10, wobei die ringförmigen Abflachungsscheiben (8, 9, 112, 114) paarweise (30a, 30b, 30c, A, B, C, D) lösbar miteinander verbunden sind und wobei jede Scheibe des Paares über eine flexiblerohrförmige Membran (7, 116) mit einer Scheibe eines angrenzenden Paares fest verbunden ist.

12. Vorrichtung nach Anspruch 10 oder 11 mit einer an der vorbestimmten Position befindlichen Anschlaganordnung (35, 70), die mit einer Scheibe (8, 114) des Paares in Eingriff kommt und diese Scheibe hält, während sie es der anderen Scheibe (9, 112) des Paares erlaubt, sich aufgrund des Einführens von Nahrungsmittelprodukt von dem Füllrohr aus zu bewegen.

13. Vorrichtung nach einem der Ansprüche 10 bis 12, wobei die Mittel zur Montage der Hüllenanordnung (25, 77, 79) auf dem Füllrohr (65) einen Füllrohrabschnitt (5, 67) aufweisen, der die Gruppe von ringförmigen Scheiben (8, 9, 112, 114, 122, 124) tragen kann.

14. Vorrichtung nach einem der Ansprüche 10 bis 13, wobei die Mittel zur Montage der Hüllenanordnung auf dem Füllrohr (65) einen Abschnitt (71) mit einem kreisförmigen oder elliptischen Querschnitt aufweisen, der die Gruppe von ringförmigen Scheiben (8, 9, 112, 114, 122, 124) tragen kann.

15. Vorrichtung nach einem der Ansprüche 10 bis 14, die ferner eine um das Füllrohr (65) herum angeordnete Kalibrier- oder Rückhalteanordnung (3, 73) aufweist, welche zu einer Reckkalibrierung des entrafften Teils (2, 79) der Hülle beiträgt.

16. Vorrichtung nach Anspruch 15, wobei die Kalibrier- oder Rückhalteanordnung (3, 73) innerhalb des entrafften Hüllenteils (2, 79) untergebracht und ein Teil der Hüllenanordnung (25, 77, 79) ist.

17. Vorrichtung nach einem der Ansprüche 10 bis 16, wobei die Hüllenmontagemittel ein Tragrohr (65) mit einem Einlaßende und einem Auslaßende zur Förderung von Nahrungsmittelprodukt von einer Vorratsquelle aus aufweisen, das Tragrohr zum Tragen der gerafften rohrförmigen Hüllenanordnung (25, 77, 79) geeignet ist, und das Tragrohr mit einem Rohrabschnitt (5, 66) versehen ist, der den entrafften Teil (2, 79) der gerafften rohrförmigen Hüllenanordnung einschließlich der innerhalb des entrafften Teils der Hülle untergebrachten Gruppe von axial angeordneten ringförmigen Abflachungsscheiben (8, 9, 112, 114, 122, 124) halten kann und der sich durch die Mittelöffnungen (118, 120) der ringförmigen Scheiben hindurcherstreckt.

18. Vorrichtung nach einem der Ansprüche 12 bis 17, die zusätzlich mit einer Emulsionsdichtanordnung (23) versehen ist, die nahe der Anschlaganordnung (35, 70) sitzt und mit dem Außenumfang der einen Scheibe (8, 114) des Paares zusammenwirkt, die von der Anschlaganordnung gehalten wird, wobei die Emulsionsdichtanordnung (23) eine Abdichtung für die entraffte Hülle (2, 79) an em Umfang der einen Scheibe bewirkt.

19. Vorrichtung nach Anspruch 18, wobei die Emulsionsdichtanordnung (23) ein Spaltring ist.

**Revendications**

1. Procédé pour produire automatiquement et en continu un produit alimentaire enveloppé (21, 105) ayant un diamètre sensiblement uniforme et des extrémités sensiblement plates, qui consiste:

(a) à monter un article à enveloppe tubulaire plissée (25, 77, 79), contenant une rangée de disques annulaires (8, 9, 112, 114, 122, 124) d'aplatissement, disposés à l'intérieur d'un tronçon non plissé (2, 79), fermé aux extrémités, de ladite enveloppe tubulaire plissée (1, 77), sur un cornet de poussage (65) d'un appareil de poussage alimentaire;

(b) à positionner un premier disque d'aplatissement (9, 112, 122) et un second disque annulaire (8, 114, 124) de ladite rangée à proximité de l'extrémité fermée de ladite enveloppe et de l'extrémité de décharge dudit cornet de poussage (65) afin que les parties d'aplatissement desdits premier et second disques (8, 9, 112, 114, 122, 124) soient essentiellement perpendiculaires à l'axe longitudinal dudit cornet de poussage;

(c) à décharger un produit alimentaire sous pression de l'extrémité de décharge dudit cornet de poussage (65) entre lesdits premier et second disques (8, 9, 112, 114, 124) en quantité suffisante pour former une longueur d'aliment enveloppé entre lesdits premier et second disques;

(d) à rassembler un tronçon non plissé de ladite enveloppe en un point en aval du second disque annulaire (8, 114, 124) et à fermer l'enveloppe audit point pour donner un produit alimentaire enveloppé totalement fermé (21, 105) ayant des extrémités sensiblement plates;

(e) à positionner une paire suivante de disques annulaires d'aplatissement à proximité de l'extrémité de décharge dudit cornet de poussage (65) afin que la partie d'aplatissement de chaque disque de ladite paire suivante desdits disques soit essentiellement perpendiculaire à l'axe longitudinal dudit cornet de poussage; à fermer la longueur d'enveloppe suivante; et à sectionner le produit alimentaire enveloppé totalement fermé; et

(f) à répéter les étapes (c) à (e) en utilisant ladite paire suivante de disques à la place desdits premier et second disques pour fomer une autre longueur d'aliment enveloppé.

2. Procédé selon la revendication 1, qui consiste à continuer le cycle des étapes (c) à (f) d'une manière automatique et continue jusqu'à ce que l'enveloppe (1, 2, 77, 79) ou les disques annulaires (8, 9, 112, 114, 122, 124) soient épuisés.

3. Procédé selon la revendication 1 ou 2, dans lequel ledit second disque annulaire (8, 114) présente un périmètre extérieur plus grand que le périmètre intérieur non étiré de l'enveloppe (25, 77, 79) lorsqu'il est placé dans une position essentiellement perpendiculaire à l'axe dudit cornet de poussage (65) avant l'étape (c), afin d'exécuter au moins une fonction partielle de calibrage de l'enveloppe pour le tronçon non plissé (2, 79) de ladite enveloppe.

4. Procédé selon l'une des revendications 1 à 3, dans lequel chacun desdits disques annulaires (8, 9, 112, 114, 122, 124) présente un diamètre extérieur inférieur au diamètre d'éclatement de ladite enveloppe (25, 77, 79).

5. Procédé selon l'une des revendications 1 à 4, dans lequel le diamètre du trou central (118, 120) de chacun desdits disques annulaires (8, 9, 112, 114, 122, 124) ne dépasse pas 90% du diamètre extérieur du disque annulaire.

6. Procédé selon l'une des revendications 1 à 5, dans lequel ledit tronçon non plissé (2, 79) de ladite enveloppe (25, 77, 79) contient en outre des moyens de calibrage (3, 73) disposés à l'intérieur de ce tronçon.

7. Procédé selon l'une des revendications 1 à 6, dans lequel lesdits disques annulaires d'aplatissement (8, 9, 112, 114) sont reliés de façon amovible par paires (30a, 30b, 30c, A, B, C, D), chaque disque de la paire étant relié fixement, au moyen d'une membrane tubulaire flexible (7, 116) à un disque d'une paire contiguë.

8. Procédé selon la revendication 7, dans lequel lesdites paires (30a, 30b, 30c, A, B, C, D) possèdent chacune des disques annulaires avant et arrière (9, 8, 112, 114), ledit disque annulaire avant (9, 112) ayant un trou central (118) d'un diamètre supérieur au diamètre du trou central (120) du disque annulaire arrière (8, 114) de la paire.

9. Procédé selon l'une des revendications 1 à 4, dans lequel ledit premier disque d'aplatissement (9, 112, 122) est un disque annulaire ou un disque plein.

10. Appareil pour produire automatiquement en continu un produit alimentaire enveloppé (21, 105) ayant un diamètre sensiblement uniforme et des extrémités sensiblement plates, comprenant:

(a) un cornet de poussage (65) à travers lequel le produit à envelopper est expulsé;

(b) des moyens (5, 67) de montage d'un article à enveloppe tubulaire plissée (25, 77, 79), comportant un tronçon non plissé (2, 79) qui contient une rangée de disques annulaires d'aplatissement (8, 9, 112, 114, 122, 124), sur ledit cornet de poussage (65); et

(c) des moyens de positionnement (29) mobiles axialement par rapport audit cornet de poussage (65) afin de porter contre lesdits disques et de les déplacer de ladite rangée vers une position préétablie proche de l'extrémité de décharge du cornet de poussage.

11. Appareil selon la revendication 10, dans lequel lesdits disques annulaires d'aplatissement (8, 9, 112, 114) sont reliés de façon amovible par paires (30a, 30b, 30c, A, B, C, D), chaque disque de la paire étant relié fixement au moyen d'une membrane tubulaire flexible (7, 116) à un disque d'une paire contiguë.

12. Appareil selon la revendication 10 ou 11, comprenant des moyens de butée (35, 70) dans ladite position préétablie, destinés à porter contre un premier disque (8, 114) de ladite paire et à le maintenir tout en laissant l'autre disque (9, 112) de ladite paire libre de se déplacer sous l'effet de l'introduction d'un produit alimentaire à partir dudit cornet de poussage.

13. Appareil selon l'une des revendications 10 à 12, dans lequel lesdits moyens destinés au montage dudit article à enveloppe (25, 77, 79) sur ledit cornet de poussage (65) comprennent une partie (5, 67) de cornet de poussage conçue pour porter ladite rangée de disques annulaires (8, 9, 112, 114, 124).

14. Appareil selon l'une des revendications 10 à 13, dans laquel lesdits moyens destineés au montage dudit article à enveloppe sur ledit cornet de poussage (65) comprennent une partie (71) ayant une section transversale circulaire ou elliptique, conçue pour porter ladite rangée de disques annulaires (8, 9, 112, 114, 122, 124).

15. Appareil selon l'une des revendications 10 à 14, contenant en outre des moyens de calibrage ou de retenue (3, 73) disposés autour dudit cornet de poussage (65) afin de faciliter l'étirage-calibrage du tronçon non plissé (2, 79) de ladite enveloppe.

16. Appareil selon la revendication 15, dans lequel lesdits moyens de calibrage ou de retenue (3, 73) sont disposés à l'intérieur dudit tronçon d'enveloppe non plissé (2, 79) et constituent une partie dudit article à enveloppe (25, 77, 79).

17. Appareil selon l'une des revendications 10 à 16, dans lequel lesdits moyens de montage de l'article comprennent un tube (65) de support ayant une extrémité d'entrée et une extrémité de décharge pour le transport d'un produit alimentaire à partir d'une source d'alimentation, ledit tube de support étant conçu pour porter ledit article à enveloppe tubulaire plissée (25, 77, 79) et ledit tube de support comportant un tronçon de tube (5, 66) conçu pour maintenir ledit tronçon non plissé (2, 79) dudit article à enveloppe tubulaire plissée comprenant ladite rangée de disques annulaires d'aplatissement, disposés axialement (8, 9, 112, 114, 122, 124), à l'intérieur dudit tronçon non plissé d'enveloppe, ledit tronçon de tube passant dans les trous centraux (118, 120) desdits disques annulaires.

18. Appareil selon l'une des revendications 12 à 17, qui contient en outre des moyens (23) d'étanchéité à l'émulsion, disposés à proximité desdits moyens de butée (35, 70) et coopérant avec la périphérie extérieure dudit premier disque (8, 114) de ladite paire maintenu par lesdits moyens de butée, lesdits moyens (23) d'étanchéité à l'émulsion réalisant un joint étanche pour ladite enveloppe non plissée (2, 79) à la périphérie dudit premier disque.

19. Appareil selon la revendication 18, dans lequel lesdits moyens (23) d'étachéité à l'émulsion comprennent un anneau fendu.

FIG. I

FIG. 2

FIG. 3

FIG. 4

FIG. 5

FIG. 6

FIG. 7

FIG. 8

FIG. 9a

FIG. 9b

0 106 238

FIG. 10

FIG. 11

FIG. 12

FIG. 13

FIG. 14

FIG. 16

FIG. 15